# EUROPÄISCHE PATENTSCHRIFT

(11) **EP 1 035 185 B1**
(45) Veröffentlichungstag und Bekanntmachung des Hinweises auf die Patenterteilung: **28.01.2004**
(21) Anmeldenummer: 00103686.2
(22) Anmeldetag: 22.02.2000
(51) Int. Cl.: C09J 7/00, C09J 7/02

(54) **Mehrlagige, kreuzgewickelte Spule aus trägerlosem, beidseitig haftklebendem Transferklebeband**
Multilayer roll of linerless double-sided self-adhesive transfer tape wounded in criss-cross fashion
Rouleau multicouche de bandes-transfert auto-adhésives sans support, enroulé en bobinage croisé

(30) Priorität: 12.03.1999 DE 19911063
(43) Veröffentlichungstag der Anmeldung: 13.09.2000
(73) Patentinhaber: Lohmann GmbH & Co. KG, 56567 Neuwied (DE)
(72) Erfinder: Gerhards, Ralf, 56567 Neuwied (DE); Nittenwilm, Ralf, 56203 Höhr-Grenzhausen (DE)
(74) Vertreter: Flaccus, Rolf-Dieter, Dr.

(56) Entgegenhaltungen:
- EP-A- 0 607 709
- EP-A- 0 628 616
- DE-C- 4 319 023
- US-A- 5 096 777

## Beschreibung

Die Erfindung betrifft eine mehrlagige, kreuzgewickelte Spule aus trägerlosem, beidseitig haftklebendem Transferklebeband, bestehend aus einer drucksensitiven Schicht eines Klebstofffilms, deren Lagen mit einer ablösbaren Abdekkung und zusätzlich mit einer Zwischenabdeckung unter Bildung der Spule auf einen Spulenkörper aufgewickelt sind.

Transferklebebänder schaffen einen dauerhaft festen und flexiblen Verbund in den verschiedensten Bereichen der industriellen Fertigung. Ein typisches Anwendungsbeispiel ist die Verklebung von Kunststoffprofilen. Transferklebebänder helfen Arbeitsabläufe vor allem in Serienproduktionen zu verkürzen und ergeben zeitliche und preisliche Vorteile gegenüber konventionellen technischen Befestigungsmethoden.

Als Transferklebebänder werden Haftkleber ohne Trägermaterial bezeichnet. Es handelt sich um Klebstofffilme, die zu 100% aus Haftklebstoffpolymeren bestehen. Für die Verarbeitung sind sie üblicherweise auf einem ablösbaren Trägermaterial aufgebracht. Zur vollautomatischen Applikation werden solche Klebebänder in Form von Bändern zu kreuzgewikkelten Spulen oder Spulenkörpern konfektioniert.
Im Unterschied zu klassischen, doppelseitigen Haftklebebändern mit Trägermaterial sind Transferklebebänder ohne Trägermaterial wesentlich elastischer, jedoch verkleben sie nachteilig an ihren Schnittkanten.
Um dies zu vermeiden, wurde bereits vorgeschlagen, eine zusätzliche Zwischenabdeckung, einen sogenannten Interliner, einzusetzen, welcher dehäsiv und deutlich breiter als das Transferklebeband ist. Dadurch wird das durch "kalten Fluß" von Klebermedium bedingte Verblocken der einzelnen Lagen des Transferbandes verhindert.

Es hat sich jedoch herausgestellt, daß bei Schichtung mehrerer Lagen die so gebildete Spule trotz Bindung der Lagen an jeder Kreuzung aufgrund der dehäsiven, glatten Zwischenabdeckung diese gegeneinander einfach zu verschieben sind und somit leicht verrutschen. Besonders am Rand der Spule ist ein Verrutschen der Lagen der Bänder durch unzureichenden Halt infolge fehlender Kreuzungspunkte gegeben.
Es ist bekannt, zur Vermeidung dieses Problems bei automatischer Applikation eine seitliche Randbegrenzung für Spulen einzusetzen, sogenannte Bordscheiben.

Trotz dieser Maßnahme, aber auch infolge unsachgemäßen Gebrauchs bzw. beim Transport kommt es zum Verrutschen einzelner Klebebandlagen. Damit ist die Spulenware schwer zu verarbeiten oder es muß neues Material eingesetzt werden.

Ausgehend vom vorgenanntem Stand der Technik liegt der Erfindung die Aufgabe zugrunde, bei kreuzgewickelten Spulen das Verrutschen einzelner Lagen der Klebebänder zu verhindern und damit das Auf- und Abspulen zu vereinfachen und sicher zu gestalten.

Die Aufgabe wird erfindungsgemäß durch eine Spule mit den Merkmalen des Hauptanspruchs gelöst, die dadurch gekennzeichnet ist, daß die Zwischenabdeckung mindestens rückseitig schwach haftklebend ausgerüstet ist.

Durch diese schwach selbstklebende Ausrüstung werden mit Vorteil und in überraschend einfacher Weise die einzelnen Lagen des Klebebandes untereinander fixiert und damit ein Verrutschen wirkungsvoll verhindert, so daß unabhängig von der Wickelweise ein fester Verbund der Bänder gesichert ist.

Ein wesentlicher Vorteil der Erfindung besteht darin, daß nun beim automatischen Abspulen ein Verrutschen wirkungsvoll verhindert und somit ein zügiges und kostensparendes Arbeiten gewährleistet wird. Damit werden hohe Ausschußraten vermieden. Darüber hinaus können die Spulen dieser Klebebänder preiswerter als herkömmliche angeboten werden, da auf den Einsatz von Bordscheiben verzichtet werden kann.

Ein weiterer Vorteil der erfindungsgemäßen Ausgestaltung besteht darin, daß durch die Auswahl einer geeigneten Zwischenabdeckung nunmehr mit höheren Zugspannungen bei automatischer Applikation gearbeitet werden kann. Damit wird das Aufbringen des Klebebandes erleichtert und eine exakte Positionierung gewährleistet.

Ein weiterer Vorteil der erfindungsgemäßen Ausgestaltung ist die problemlose Handhabung der Spulen bei Transport und/oder Lagerung.

Eine vorteilhafte Ausgestaltung der Erfindung bei Verwendung einer einseitig schwach haftenden Folie als Zwischenabdeckung ist eine vorzugsweise Verwendung von Polyethylen mit einer Dicke von 100 µm, oder ein Flächenmaterial wie z.B. Schaumstoff, Papier oder textiles Flächengebilde. Damit lassen sich höhere Zugspannungen beim automatischen Abspulen erreichen. Wellenbildung und Spannungen im Material werden dadurch verhindert oder zumindest vermindert.
Die Dicke der druckempfindlichen Haftklebeschicht beträgt vorteilhaft zwischen 0, 05 und 2 mm.
Vorzugsweise weist die Haftklebeschicht eine Breite von 2 bis 10 mm auf.

Eine vorteilhafte Ausführungsform weist eine Trennkraft der Zwischenabdeckung (Interliner) zu der Abdeckung des Transferklebebandes der darunterliegenden Schicht von 10 cN/25 mm auf. Vorzugsweise liegt die Trennkraft der Zwischenabdeckung im Bereich von 2-100 cN/ 25 mm, insbesondere von 10-15 cN/ 25 mm. Die Messung dieser Klebkräfte wurde in Anlehnung an DIN EN 1939 vorgenommen.
Zur Abdeckung wird eine abgestuft silikonisierte Polyethylenfolie eingesetzt, wobei die schwächer silikonisierte Seite dem Transferklebeband zugewandt ist. Die Werte der Trennkräfte zwischen Transferklebeband und Abdeckung sind so gestaltet, daß sie größer sind als die Werte von Zwischenabdeckung und Abdeckung. Sie liegen im Bereich von 100-300 cN/ 25 mm.

Die Erfindung wird durch das nachfolgende Beispiel verdeutlicht.

### Beispiel:

Die Klebstoffschicht eines trägerlosen Transferklebebandes wird auf Polyacrylatbasis durch UV-Polymerisation hergestellt. Die Schicht hat beispielsweise eine Dicke von 1,2 mm und eine Breite von 8 mm. Die Zwischenabdeckung besteht aus einer Polyethylenfolie mit einer Dicke von 100 µm. Sie wird Korona-vorbehandelt und anschließend mit einem Polyacrylsäureester auf Lösemittelbasis auf bekannte Weise mit einem resultierendem Auftragsgewicht von 30 g/m² beschichtet. Das Transferklebeband wird zusammen mit der einseitig schwach haftklebend ausgerüsteten Zwischenabdeckung zu kreuzgewickelten Spulen konfektioniert, und auf einen Spulenkörper aufgewickelt.

Diese Erfindung ermöglicht eine problemlose Verarbeitung von zu kreuzgewickelten Spulen konfektionierten schmalen Transferklebebändern und zeigt, wie beschrieben, wesentliche Vorteile gegenüber herkömmlicher Spulenware.

## Patentansprüche

1. Mehrlagige, kreuzgewickelte Spule aus trägerlosem, beidseitig haftklebendem Transferklebeband, bestehend aus einer drucksensitiven Schicht eines Klebstofffilms, wobei die Lagen der Spule mit einer lösbaren Abdeckung und zusätzlich mit einer Zwischenlage unter Bildung einer Spule auf einen Spulenkörper aufgewickelt sind, **dadurch gekennzeichnet, daß** die Zwischenabdeckung mindestens rückseitig schwach haftklebend ausgerüstet ist.

2. Spule nach Anspruch 1, **dadurch gekennzeichnet, daß** die Trennkraft zwischen der Zwischenabdeckung und der Abdeckung des Transferklebebandes kleiner ist als die Trennkraft zwischen der Abdeckung und des Transferklebebandes selber.

3. Spule nach Anspruch 1 oder 2, **dadurch gekennzeichnet, daß** die Zwischenabdeckung etwa die doppelte Breite des Transferklebebandes besitzt.

4. Spule nach einem oder mehreren der Ansprüche 1 bis 3, **dadurch gekennzeichnet, daß** die Zwischenabdeckung eine Folie mit einer Dicke von ca. 100 µm ist.

5. Spule nach einem oder mehreren der Ansprüche 1 bis 4, **dadurch gekennzeichnet, daß** die drucksensitive Schicht des Klebstofffilms eine Dicke von 0,05 - 2 mm und eine Breite von 2 - 10 mm aufweist.

6. Spule nach einem oder mehreren der Ansprüche 1 bis 5, **dadurch gekennzeichnet, daß** die Zwischenabdeckung asymmetrisch auf das Transferklebeband aufgebracht ist.

7. Spule nach einem oder mehreren der Ansprüche 1 bis 6, **dadurch gekennzeichnet, daß** die Klebstoffschicht des Klebstofffilms auf Polyacrylatbasis hergestellt ist.

8. Spule nach einem oder mehreren der Ansprüche 1 bis 7, **dadurch gekennzeichnet, daß** die Klebstoffschicht des Klebstofffilms mit Füllstoffen wie Mikrokugeln und/oder Kieselsäure versetzt ist.

9. Spule nach einem oder mehreren der Ansprüche 1 bis 8, **dadurch gekennzeichnet, daß** die Trennkraft der Zwischenabdeckung zu der Abdeckung des Transferklebebandes der darunterliegenden Schicht im Bereich von 2 - 100 cN/ 25 mm, vorzugsweise von 5 - 15 cN/ 25 mm liegt.

10. Spule nach einem oder mehreren der Ansprüche 1 bis 9, **dadurch gekennzeichnet, daß** die Trennkraft zwischen Transferklebeband und Abdeckung im Bereich von 50 - 300 cN/ 25 mm liegt.

11. Verwendung einer Wicklung von Transferklebeband nach den vorangehenden Ansprüchen zur Herstellung von Klebeverbindungen oder Verklebungen von Teilen in der industriellen Fertigung.

## Claims

1. Multilayer cross-wound spool of unsupported double-sided pressure sensitive adhesive transfer tape, consisting of a pressure sensitive adhesive layer of adhesive film, where the plies of the spool are wound on a spool core together with a detachable liner and, in addition, with an interliner, thereby forming a spool, **characterized in that** the said interliner is rendered slightly pressure sensitive adhesive at least on its rear side.

2. Spool according to claim 1 **characterized in that** the release strength between the interliner and the liner of the adhesive transfer tape is smaller than the release strength between the liner and the adhesive transfer tape.

3. Spool according to claim 1 or 2, **characterized in that** the width of the interliner is approximately twice as large as the width of the adhesive transfer tape.

4. Spool according to one or more of claims 1 to 3 **characterized in that** the interliner is a film having a thickness of approx. 100 µm.

5. Spool according to one or more of claims 1 to 4, **characterized in that** the pressure sensitive adhesive layer of the adhesive film has a thickness of 0.05 - 2 mm and a width of 2 - 10 mm.

6. Spool according to one or more of claims 1 to 5, **characterized in that** the interliner is asymmetrically applied to the adhesive transfer tape.

7. Spool according to one or more of claims 1 to 6, **characterized in that** the adhesive layer of the adhesive film is made on the basis of polyacrylate.

8. Spool according to one or more of claims 1 to 7, **characterized in that** the adhesive layer of the adhesive film is mixed with fillers such as microspheres and/or silicic acid.

9. Spool according to one or more of claims 1 to 8, **characterized in that** the release strength of the interliner towards the liner of the adhesive transfer tape of the underlying layer is in the range of 2 - 100 cN/25 mm, preferably 5 - 15 cN/25 mm.

10. Spool according to one or more of claims 1 to 9 **characterized in that** the release strength between the adhesive transfer tape and the liner is in the range of 50 - 300 cN/25 mm.

11. Use of a spool of adhesive transfer tape according to any one of the preceding claims for making adhesive joints or bonds of parts in industrial manufacture.

## Revendications

1. Rouleau multicouche de bande-transfert auto-adhésive des deux côtés, sans support, enroulé en bobinage croisé, constitué d'une couche d'un film adhésif, sensible à la pression, les couches du rouleau étant enroulées avec un revêtement détachable et, en plus, avec une couche intermédiaire, en formant un rouleau sur un corps de bobine, **caractérisé en ce que** le revêtement intermédiaire est équipé de manière faiblement auto-adhésive au moins du côté du dos.

2. Rouleau selon la revendication 1, **caractérisé en ce que** la force de séparation entre le revêtement intermédiaire et le revêtement de la bande-transfert auto-adhésive est inférieure à la force de séparation entre le revêtement et la bande-transfert auto-adhésive.

3. Rouleau selon la revendication 1 ou 2, **caractérisé en ce que** le revêtement intermédiaire possède une largeur environ double de la bande-transfert auto-adhésive.

4. Rouleau selon une ou plusieurs des revendications 1 à 3, **caractérisé en ce que** le revêtement intermédiaire est une feuille d'une épaisseur d'env. 100 µm.

5. Rouleau selon une ou plusieurs des revendications 1 à 4, **caractérisé en ce que** la couche sensible à la pression du film adhésif présente une épaisseur de 0,05 mm à 2 mm et une largeur de 2 à 10 mm.

6. Rouleau selon une ou plusieurs des revendications 1 à 5, **caractérisé en ce que** le revêtement intermédiaire est appliqué de manière asymétrique sur la bande-transfert auto-adhésive.

7. Rouleau selon une ou plusieurs des revendications 1 à 6, **caractérisé en ce que** la couche adhésive du film adhésif est fabriquée à base de polyacrylate.

8. Rouleau selon une ou plusieurs des revendications 1 à 7, **caractérisé en ce que** des agents de remplissage, comme des microbilles et/ou de l'acide silicique, sont ajoutés à la couche adhésive du film adhésif.

9. Rouleau selon une ou plusieurs des revendications 1 à 8, **caractérisé en ce que** la force de séparation du revêtement intermédiaire vers la bande-transfert auto-adhésive de la couche située en-dessous se trouve dans la plage de 2 à 100 cN / 25 mm, de préférence de 5 à 15 cN / 25 mm.

10. Rouleau selon une ou plusieurs des revendications 1 à 9, **caractérisé en ce que** la force de séparation entre la bande-transfert auto-adhésive et le revêtement se trouve dans la plage de 50 à 300 cN / 25 mm.

11. Utilisation d'un enroulement de bande-transfert auto-adhésive selon les revendications précédentes pour la fabrication de liaisons auto-adhésives ou d'encollages de pièces dans la production industrielle.
